# EUROPÄISCHE PATENTSCHRIFT

(11) **EP 3 191 069 B1**
(45) Veröffentlichungstag und Bekanntmachung des Hinweises auf die Patenterteilung: **26.12.2018**
(21) Anmeldenummer: 15770435.4
(22) Anmeldetag: 08.09.2015
(51) Int. Cl.: A61J 3/08, A61J 3/00, A61J 3/06, A61J 3/10, B29B 7/38, B29C 47/36

(54) **VERFAHREN UND VORRICHTUNG ZUR HERSTELLUNG EINES EXTRUDATS**
METHOD AND DEVICE FOR PRODUCING AN EXTRUDATE
PROCÉDÉ ET DISPOSITIF DE PRODUCTION D'UN PRODUIT D'EXTRUSION

(30) Priorität: 12.09.2014 CH 13862014
(43) Veröffentlichungstag der Anmeldung: 19.07.2017
(73) Patentinhaber: Chemspeed Technologies AG, 4414 Füllinsdorf (CH)
(72) Erfinder: GUELLER, Rolf, CH-5027 Herznach (CH)
(74) Vertreter: Bohest AG
(86) Internationale Anmeldenummer: PCT/CH2015/000130
(87) Internationale Veröffentlichungsnummer: WO 2016/037294

(56) Entgegenhaltungen:
- WO-A2-00/32169
- DE-A1-102004 032 051
- US-A- 5 965 161

## Beschreibung

Die vorliegende Erfindung betrifft ein Verfahren und eine Vorrichtung zur Herstellung eines Extrudats gemäss dem Oberbegriff des unabhängigen Patentanspruchs 1 bzw. des unabhängigen Patentanspruchs 6.

In der pharmazeutischen Industrie wird ständig an der Verbesserung von Applikationsmethoden für (potentielle) Medikamente gearbeitet. Eine solche Methode ist das Verfahren der sogenannten Hot-Melt-Extrudierung, in welchem ein Medikament homogen in ein spezifisches (z.B. wasserlösliches) Polymer (mit z.B. der zusätzlichen Wirkung wie ein Emulgator) eingemischt bzw. eingeschmolzen wird. Die Überprüfung der Wirksamkeit (z.B. der Abgabegeschwindigkeit des Wirkstoffs) wird dabei üblicherweise so durchgeführt, dass verschiedene Polymere und verschiedene Medikamente und allenfalls Zusatzstoffe wie Emulgatoren unter verschiedenen Bedingungen hergestellt werden. Dazu werden üblicherweise kontinuierlich arbeitende Heissschmelz- ("Hot Melt") Extruder eingesetzt. Diese arbeiten so, dass das Polymer und die entsprechende Konzentration des potentiellen Medikamentes und der allfälligen weiteren Zusatzstoffe in einen temperaturregulierten Extruder, insbesondere einen Schneckenextruder oder einen Doppelschneckenextruder, eingegeben und dann im Extruder nahe oder über dem Schmelzpunkt des Polymers homogen vermischt werden. Anschliessend wird extrudiert und das Extrudat (bzw. abgeschnittene Stücke eines extrudierten Strangs) wird z.B. daraufhin getestet, wie schnell sich das Extrudat und damit auch das zuvor eingemischte Medikament auflöst. Diese Verfahrensweise und die zugehörigen Technologien sind ausführlich im Buch "Hot Melt Extrusion with BASF Pharma Polymers - Extrusion Compendium", 2. revidierte und ergänzte Auflage, Oktober 2012 von K. Kolter, M. Karl und A. Grycke beschrieben. Darüber hinaus sind in der DE 10 2004 032 051 A1 ein Verfahren und eine Vorrichtung zur Herstellung eines Extrudats aus mindestens zwei Ausgangsprodukten mittels eines Planetwalzen-Extruders offenbart, wobei die Ausgangsprodukte mindestens einen Wirkstoff und ein Polymer umfassen, die miteinander vermischt und erwärmt werden.

Um möglichst viele Polymer/Medikament/Zusatzstoff-Mischungen unterschiedlicher Formulierungen, Prozessparameter und Konzentrationen in Kombination mit unterschiedlichen Tests untersuchen zu können, sind oft sehr grosse Anzahlen von solchen Versuchen und anschliessenden Tests nötig. Dies nimmt sehr viel Zeit in Anspruch, insbesondere weil die dafür bisher im Labormassstab eingesetzten Extrudierverfahren bzw. -vorrichtungen kontinuierlich arbeiten und damit sehr viel Vorbereitungszeit beanspruchen. Auf der anderen Seite steht mit neueren Forschungsverfahren immer weniger der zu testenden Substanz zur Verfügung. Die bekannten kontinuierlich arbeitenden Verfahren und Vorrichtungen benötigen aber eine relativ grosse Menge von Testsubstanzen. Dies ist insbesondere aus "time to market"- und Kostengründen unerwünscht.

Davon ausgehend liegt der Erfindung die Aufgabe zugrunde, ein Verfahren zur Herstellung eines Extrudats sowie eine entsprechende Vorrichtung zur Verfügung zu stellen, die sehr rasch und effizient arbeiten und auch die Verarbeitung von sehr geringen Substanzmengen erlauben.

Zudem soll das Verfahren vorzugsweise die Voraussetzungen für ein automatisches Handling schaffen. Im Weiteren soll das Verfahren möglichst derart skalierbar sein, dass das Verfahren (und die entsprechende Vorrichtung) nicht nur in Forschung und Entwicklung, sondern auch für die Produktion eingesetzt werden kann. Gleichzeitig sollen das Verfahren und die entsprechende Vorrichtung nicht nur zum Einschmelzen von pharmazeutischen Wirkstoffen einsetzbar sein, sondern z.B. auch um Aromastoffe in Polymeren zu fixieren, um diese anschliessend unter kontrollierten Bedingungen wieder freizusetzen. Das Verfahren und die entsprechende Vorrichtung sollen ferner generell auch für die Herstellung von Extrudaten aus Polymermischungen geeignet sein.

Diese Aufgabe wird erfindungsgemäss durch ein Verfahren und eine Vorrichtung gelöst, wie sie durch die Merkmale des unabhängigen Patentanspruchs 1 bzw. des unabhängigen Patentanspruchs 6 spezifiziert sind. Weitere vorteilhafte Aspekte ergeben sich aus den Merkmalen der jeweils abhängigen Patentansprüche.

Hinsichtlich des erfindungsgemässen Verfahrens besteht das Wesen der Erfindung im Folgenden: Bei einem Verfahren zur Herstellung eines Extrudats werden mindestens zwei Ausgangsprodukte, von denen mindestens eines ein heissschmelzendes Ausgangsprodukt ist, in einen Extrudierbehälter eingebracht, erwärmt und homogen miteinander vermischt. Zur Vermischung der Ausgangsprodukte wird der die Ausgangsprodukte enthaltende Extrudierbehälter dual asymmetrisch zentrifugiert, wobei der Extrudierbehälter um eine ausserhalb des Extrudierbehälters verlaufende primäre Rotationsachse und gleichzeitig um eine durch den Extrudierbehälter verlaufende und zur primären Rotationsachse in einem spitzen Winkel stehende sekundäre Rotationsachse rotiert wird. Die miteinander vermischten Ausgangsprodukte werden schliesslich gemeinsam aus dem Extrudierbehälter extrudiert.

Beim erfindungsgemässen Verfahren erfolgt das Durchmischen der Ausgangsprodukte nicht in erster Linie auf klassische Weise durch mechanische Bewegung der Ausgangsprodukte innerhalb des Extrudierbehälters, sondern diffusionsbasiert, d.h. durch beschleunigte Diffusion der in der Regel schwer zu mischenden Ausgangsprodukte ineinander. Die Diffusion des in der Regel zähviskosen heissen Substanzgemisches wird durch die Kombination der beim dualen asymmetrischen Zentrifugieren in zwei unterschiedlichen Ebenen wirkenden Beschleunigungskräfte erreicht. Durch die erfindungsgemässe Anwendung des Prinzips der dualen asymmetrischen Zentrifugierung wird die Herstellung von Produkten im Hot-Melt-Extrudierungsverfahren intensiviert und erheblich beschleunigt, wobei der eigentliche Mischvorgang nur sehr wenig Zeit in Anspruch nimmt (typischerweise etwa 1 Minute oder weniger). Ein weiterer signifikanter Vorteil dieses Verfahrens ist, dass für die Durchmischung der Ausgangsprodukte keine mechanischen Elemente im Extrudierbehälter erforderlich sind, so dass dieser sehr einfach gereinigt oder sogar als Wegwerf-Behälter ausgebildet sein kann. Ein weiterer wesentlicher Vorteil des erfindungsgemässen Verfahrens liegt darin, dass damit auch sehr kleine Substanzmengen verarbeitet werden können.

Bei den Ausgangsprodukten handelt es sich normalerweise um in fliess- oder rieselfähiger Form, insbesondere in Pulverform, vorliegende Ausgangsprodukte.

Vorteilhafterweise wird als Extrudierbehälter ein mit einer versperrbaren Extrudieröffnung ausgestatteter, vorzugsweise im Wesentlichen becherförmiger Behälter eingesetzt, wobei die Extrudieröffnung während der dualen asymmetrischen Zentrifugierung geschlossen gehalten und vor der Extrudierung geöffnet wird. Eine solche schliess- und öffenbare Extrudieröffnung ermöglicht ein einfaches duales asymmetrisches Zentrifugieren und anschliessendes Extrudieren.

Vorzugsweise erfolgt die Extrudierung der im Extrudierbehälter befindlichen, miteinander vermischten Ausgangsprodukte mittels eines im Extrudierbehälter beweglich angeordneten Kolbens, insbesondere eines Schraub- bzw. Gewindekolbens. Ein solcher Kolben hat eine verhältnismässig geringe Kontaktfläche zu den miteinander vermischten Ausgangsprodukten, was die Reinigung erleichtert.

Gemäss einer weiteren vorteilhaften Ausführungsvariante der Erfindung erfolgt die Extrudierung der im Extrudierbehälter befindlichen, miteinander vermischten Ausgangsprodukte durch einachsige Zentrifugierung des Extrudierbehälters. Vorzugsweise wird dabei die Vermischung der im Extrudierbehälter befindlichen Ausgangsprodukte in einer um zwei Rotationsachsen dual asymmetrisch zentrifugierenden Vorrichtung und die Extrudierung der im Extrudierbehälter befindlichen Ausgangsprodukte nach der Vermischung in derselben Vorrichtung durchgeführt, wobei die Vorrichtung während der Extrudierung nur um eine der beiden Rotationsachsen zentrifugiert. Diese Verfahrensvariante ist insbesondere in apparativer Hinsicht vorteilhaft und vereinfacht das Handling.

Hinsichtlich der Vorrichtung besteht das Wesen der Erfindung im Folgenden:
Eine erfindungsgemäss Vorrichtung zur Herstellung eines Extrudats aus mindestens zwei Ausgangsprodukten, von denen mindestens eines ein heissschmelzendes Ausgangsprodukt ist, umfasst
- einen eine Extrudieröffnung aufweisenden Extrudierbehälter zur Aufnahme der Ausgangsprodukte,
- Heizmittel zur Erwärmung der im Extrudierbehälter befindlichen Ausgangsprodukte,
- Extrudiermittel zur Extrudierung der im Extrudierbehälter befindlichen Ausgangsprodukte aus dem Extrudierbehälter,
- Zentrifugiermittel zur dual asymmetrischen Zentrifugierung des Extrudierbehälters um eine primäre Rotationsachse und eine sekundäre Rotationsachse, wobei die primäre Rotationsachse ausserhalb des Extrudierbehälters verläuft und die sekundäre Rotationsachse durch den Extrudierbehälter verläuft und zur primären Rotationsachse in einem spitzen Winkel steht.

Vorzugsweise weist die Vorrichtung Halterungsmittel zur entnehmbaren Aufnahme und Halterung des Extrudierbehälters auf, was ein einfaches Entnehmen und auch Austauschen des Extrudierbehälters ermöglicht.

Mit Vorteil umfasst die Vorrichtung Absperrmittel zum Öffnen und Schliessen der Extrudieröffnung des Extrudierbehälters. Dies ermöglicht ein einfaches duales asymmetrisches Zentrifugieren und anschliessendes Extrudieren.

Gemäss einer vorteilhaften Ausführungsform der erfindungsgemässen Vorrichtung umfassen die Extrudiermittel einen im Extrudierbehälter beweglich angeordneten Kolben zum Ausstossen der im Extrudierbehälter befindlichen, miteinander vermischten Ausgangsprodukte durch die Extrudieröffnung. Dabei ist der Kolben vorteilhafterweise als durch Drehung im Extrudierbehälter vorschiebbarer Schraub- bzw. Gewindekolben ausgebildet. Ausserdem ist der Kolben mit Vorteil aus dem Extrudierbehälter entfernbar. Dermassen ausgebildete Extrudiermittel und Extrudierbehälter sind konstruktiv einfach und auch für kleinste Substanzmengen geeignet und können einfach gereinigt werden.

Zweckmässigerweise ist der Kolben mit einer vorzugsweise öffen- und schliessbaren Entlüftungsöffnung versehen.

Vorteilhafterweise umfasst die Vorrichtung Antriebsmittel für die Bewegung des Kolbens relativ zum Extrudierbehälter.

Gemäss einer weiteren vorteilhaften Ausführungsform der erfindungsgemässen Vorrichtung ist diese zwischen einer ersten und einer zweiten Betriebsweise umstellbar ausgebildet, wobei in der ersten Betriebsweise der Extrudierbehälter um beide Rotationsachsen rotiert und wobei in der zweiten Betriebsweise der Extrudierbehälter nur um eine der beiden Rotationsachsen rotiert. Die Vorrichtung ist dabei vorzugsweise dazu ausgebildet, die im Extrudierbehälter befindlichen, miteinander vermischten Ausgangsprodukte bei geöffneter Extrudieröffnung durch einachsige Zentrifugierung um die primäre Rotationsachse aus dem Extrudierbehälter zu extrudieren. Durch diese Ausbildung der Vorrichtung wird eine einfache apparative Realisierung sowohl der Vermischung der Ausgangsprodukte als auch deren Extrudierung aus dem Extrudierbehälter erreicht.

Zweckmässigerweise weist die Vorrichtung dabei erste Antriebsmittel zum rotativen Antrieb des Extrudierbehälters um die primäre Rotationsachse und mit den ersten Antriebsmitteln kuppel- und entkuppelbare zweite Antriebsmittel zum rotativen Antrieb des Extrudierbehälters um die sekundäre Rotationsachse auf.

Zweckmässigerweise mündet die Extrudieröffnung bezogen auf die primäre Rotationsachse im Wesentlichen radial aus dem Extrudierbehälter aus.

Mit Vorteil weist die Vorrichtung Auffangmittel für aus dem Extrudierbehälter austretendes Extrudat auf.

Im Folgenden werden das erfindungsgemässe Verfahren und die erfindungsgemässe Vorrichtung unter Bezugnahme auf die beigefügten Zeichnungen anhand von Ausführungsbeispielen detaillierter beschrieben. Es zeigen:
- Fig. 1-6: - die einzelnen Schritte eines ersten Ausführungsbeispiels des erfindungsgemässen Verfahrens unter Einsatz eines ersten Ausführungsbeispiels der erfindungsgemässen Vorrichtung;
- Fig. 7-10: - vier Detailvarianten der erfindungsgemässen Vorrichtung;
- Fig. 11-12: - die zwei wesentlichsten Schritte eines zweiten Ausführungsbeispiels des erfindungsgemässen Verfahrens unter Einsatz eines zweiten Ausführungsbeispiels der erfindungsgemässen Vorrichtung und
- Fig. 13-14: - zwei weitere Ausführungsbeispiele der erfindungsgemässen Vorrichtung.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

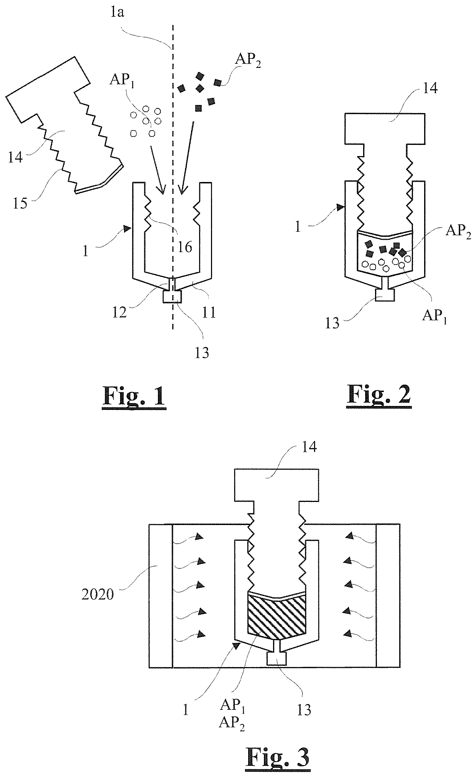

Die grundlegenden Schritte des erfindungsgemässen Extrudierverfahrens sind beispielhaft in den Figuren 1-3 dargestellt.

In einem vorbereitenden Schritt wird gemäss Fig. 1 ein im Wesentlichen rotationssymmetrischer, becherförmiger Extrudierbehälter 1 mit seinem offenen Ende nach oben bereitgestellt. Eine Achse des Extrudierbehälters ist mit la bezeichnet. Der Extrudierbehälter 1 enthält in seinem Boden 11 eine Extrudieröffnung 12, die zunächst mittels eines Absperrmittels in Form eines ein- und ausschraubbaren Schraubzapfens 13 verschlossen ist. Das Fassungsvermögen des Extrudierbehälters 1 beträgt beispielsweise nur einige cm3, kann aber selbstverständlich auch grösser sein.

In den Extrudierbehälter 1 werden nun abgemessene Mengen der zu verarbeitenden, in fliess- oder rieselfähiger Form vorliegenden Ausgangsprodukte eingebracht. In Fig. 1 sind symbolisch nur zwei Ausgangsprodukte AP₁ und AP₂ dargestellt, je nach herzustellendem Extrudat können aber selbstverständlich auch mehr als zwei Ausgangsprodukte erforderlich sein. Mindestens eines der Ausgangsprodukte ist heissschmelzend, insbesondere ein heissschmelzendes Polymer. Unter fliess- oder rieselfähig wird hier und im Folgenden pulverförmig, körnig (granular), dünnflüssig, dickflüssig und zähflüssig verstanden. In der Regel kommen im erfindungsgemässen Verfahren pulverförmige oder granulare Ausgangsprodukte zum Einsatz. Typischerweise ist mindestens eines der Ausgangsprodukte ein heissschmelzendes Polymer und ein weiteres Ausgangsprodukt ein zu testender pharmazeutischer Wirkstoff oder eine Formulierung eines solchen. Ferner können auch noch weitere

Ausgangsprodukte wie z.B. Emulgatoren oder andere Zusatzstoffe zur Anwendung kommen.

Nach dem Befüllen mit den Ausgangsprodukten wird der Extrudierbehälter 1 mittels eines in das offene Ende des Extrudierbehälters 1 einschraubbaren Schraubkolbens 14 verschlossen (Fig. 2). Ein Aussengewinde 15 des Schraubkolbens 14 greift dabei in ein Innengewinde 16 im Extrudierbehälter 1 ein.

Im nächsten Schritt werden die im Extrudierbehälter 1 befindlichen Ausgangsprodukte AP₁ und AP₂ erwärmt und dabei auf eine Temperatur nahe beim oder über dem Schmelzpunkt des heissschmelzenden Ausgangsprodukts gebracht. Dazu wird der Extrudierbehälter 1 beispielsweise in einen Heizmantel 2020 eingebracht (Fig. 3). Anstelle des Heizmantels 2020 kann auch irgendein anderes Heizmittel zur Anwendung kommen.

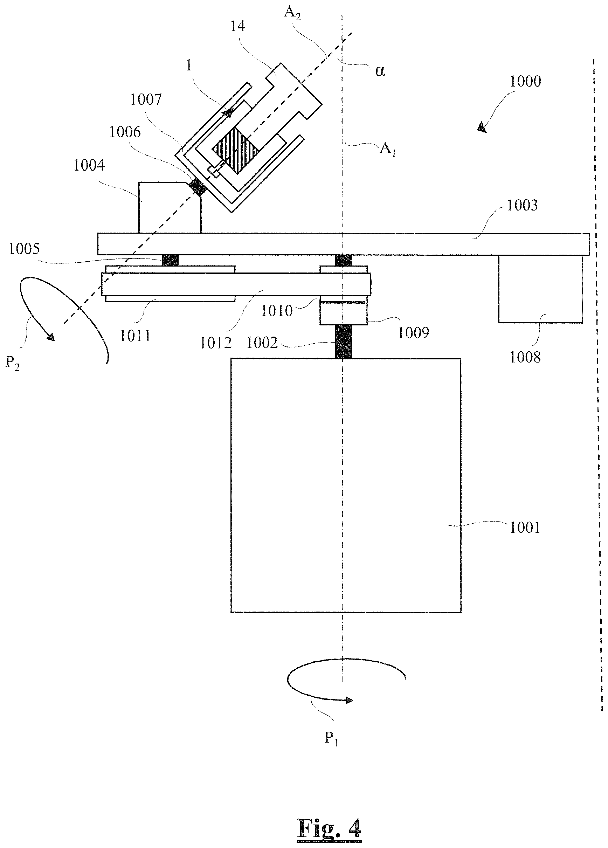

Anschliessend wird der Extrudierbehälter 1 in eine in Fig. 4 dargestellte Zentrifugiervorrichtung eingesetzt. Die als Ganze mit 1000 bezeichnete Zentrifugiervorrichtung umfasst einen von einem Motor 1001 mittels einer Welle 1002 drehend antreibbaren Drehteller 1003. Auf dem Drehteller 1003 ist ein Umlenkgetriebe 1004 angeordnet, welches eine Antriebswelle 1005 und eine Abtriebswelle 1006 aufweist. Auf der Abtriebswelle 1006 sitzt drehfest mit dieser verbunden ein Halterungsmittel in Form einer becherartigen Fassung 1007, in welcher der Extrudierbehälter 1 entnehmbar gehaltert ist. Diametral gegenüber dem Umlenkgetriebe 1004 ist unter dem Drehteller 1003 ein Unwuchtkompensationsgewicht 1008 angeordnet. Die vom Motor 1001 angetriebene Welle 1002 greift durch ein bezüglich Drehung ortsfestes Kupplungsteil 1009 und eine frei auf der Welle 1002 drehbare Riemenscheibe 1010 hindurch. Auf der Antriebswelle 1005 des Umlenkgetriebes 1004 sitzt drehfest mit dieser verbunden eine weitere Riemenscheibe 1011. Die beiden Riemenscheiben 1010 und 1011 sind über einen Antriebsriemen 1012 auf Drehung miteinander gekoppelt. Die Drehachsen der Welle 1002 bzw. des Drehtellers 1003 und der Abtriebswelle 1006 des Umlenkgetriebes 1004 bilden eine primäre Rotationsachse A₁ bzw. eine sekundäre Rotationsachse A₂.

Die sekundäre Rotationsachse A₂ verläuft durch den Extrudierbehälter 1 und fällt vorzugsweise mit dessen eigener Achse 1a (Fig. 1) zusammen. Die sekundäre Rotationsachse A₂ ist räumlich so ausgerichtet, dass sie mit der primären Rotationsachse A₁ einen spitzen Winkel α von zwischen 10° und 80°, vorzugsweise zwischen 20° und 70°, noch bevorzugter zwischen 30° und 60°, typischerweise ca. 40°, einschliesst.

Der Motor 1001, die Welle 1002 und der Drehteller 1003 bilden erste Antriebsmittel zum rotativen Antrieb des Extrudierbehälters 1 um die primäre Achse A₁. Die Dreh- bzw. Umlaufbewegung des Extrudierbehälters ist durch einen Pfeil P₁ symbolisiert. Das Umlenkgetriebe 1004, die Abtriebswelle 1006, die Antriebswelle 1005, die Riemenscheibe 1011, der Antriebsriemen 1012 und die Riemenscheibe 1010 bilden mit den ersten Antriebsmitteln kuppel- bzw. entkuppelbare zweite Antriebsmittel zum rotativen Antrieb des Extrudierbehälters 1 um die sekundäre Achse A₂ bzw. um sich selbst, wobei diese Rotationsbewegung durch den Pfeil P₂ angedeutet ist.

Die Zentrifugiervorrichtung 1000 ist, wie weiter unten noch näher erläutert wird, zwischen einer ersten und einer zweiten Betriebsweise umstellbar ausgebildet.

In der in Fig. 4 dargestellten Betriebsweise der Zentrifugiervorrichtung ist das feststehende Kupplungsteil 1009 so mit der Riemenscheibe 1010 verbunden, dass sich diese nicht drehen kann. Wenn sich der Drehteller 1003 um die primäre Achse A₁ dreht, bewegt sich das Umlenkgetriebe 1004 auf einer Kreisbahn um die feststehende Riemenscheibe 1010, wodurch die Riemenscheibe 1011 angetrieben wird. Über das Umlenkgetriebe 1004 wird die Drehbewegung der Riemenscheibe 1011 auf die Extrudierbehälteraufnahmefassung 1007 und damit auf den Extrudierbehälter 1 übertragen. In dieser Betriebsweise der Zentrifugiervorrichtung rotiert also der Extrudierbehälter 1 gleichzeitig um zwei Achsen, nämlich die primäre Rotationsachse A₁ und die sekundäre Rotationsachse A₂ (bzw. sich selbst). Die entsprechenden Rotationsbewegungen sind durch Pfeile P₁ und P₂ symbolisiert. Die Zentrifugiervorrichtung stellt in dieser Betriebsweise eine dual asymmetrisch arbeitende Zentrifuge dar.

Der Extrudierbehälter 1 wird nun mittels der Zentrifugiervorrichtung 1000 über einen bestimmten Zeitraum dual asymmetrisch zentrifugiert. Dabei werden die in ihm befindlichen Ausgangsprodukte auf sehr intensive Weise in kürzester Zeit homogen miteinander vermischt.

Die Rotationsgeschwindigkeiten um die beiden Rotationsachsen A₁ und A₂ werden empirisch so eingestellt, dass einerseits möglichst hohe Zentrifugalbeschleunigungen und kurze Mischzeiten (Zentrifugierungsdauern) erreicht werden, jedoch ohne dabei das Mischgut (die Ausgangsprodukte) thermisch zu beschädigen. Zentrifugalbeschleunigungswerte von 30 bis zu 5000 m/s², vorzugsweise von 2500 bis zu 3500 m/s², sind für die Praxis brauchbare Werte. Damit lassen sich Mischzeiten von etwa 1 Minute oder sogar noch weniger erreichen.

Die Erwärmung der im Extrudierbehälter 1 befindlichen Ausgangsprodukte kann selbstverständlich auch erst in der Zentrifugiervorrichtung 1000 bzw. während der dualen asymmetrischen Zentrifugierung erfolgen. Dazu müsste dann die Zentrifugiervorrichtung 1000 mit entsprechenden Heizmitteln z.B. an oder in der becherartigen Fassung 1007 ausgestattet sein. Prinzipiell ist es auch möglich, den Extrudierbehälter 1 selbst mit Heizmitteln auszustatten.

Ferner ist es auch möglich, die fliess- oder rieselfähigen Ausgangsprodukte im Extrudierbehälter 1 in zwei Schritten durch duale asymmetrische Zentrifugierung miteinander zu mischen, wobei ein erster Mischschritt vor der Erwärmung der Ausgangsprodukte und ein zweiter Mischschritt nach der Erwärmung der Ausgangsprodukte erfolgt.

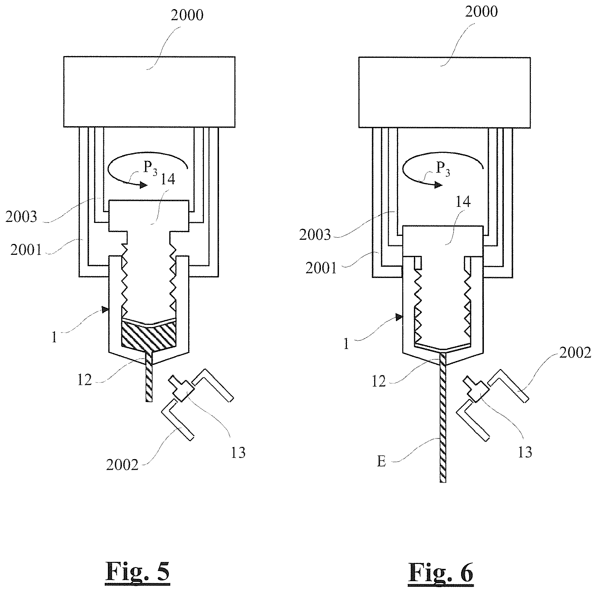

Nach der Vermischung der Ausgangsprodukte durch die erwähnte duale asymmetrische Zentrifugierung wird der Extrudierbehälter 1 aus der Zentrifugiervorrichtung 1000 entnommen. Dies kann vorzugsweise mittels eines Greifers 2001 eines rechnergesteuerten Handling-Geräts 2000 erfolgen (Fig. 5). Ein weiterer Greifer 2002 des Handling-Geräts 2000 schraubt den Schraubzapfen 13 aus dem Boden 11 des Extrudierbehälters 1 und öffnet damit die Extrudieröffnung 12.

Nun erfolgt der eigentliche Extrudiervorgang. Dazu wird vorzugsweise wiederum mittels eines weiteren Greifers 2003 des Handling-Geräts 2000 der Schraubkolben 14 in den Extrudierbehälter 1 hinein gedreht (Pfeil P₃), wodurch die in diesem enthaltenen, homogen miteinander vermischten Ausgangsprodukte durch die Extrudieröffnung 12 aus dem Extrudierbehälter 1 extrudiert werden (Fig. 6). Das dabei anfallende, bei niedrigerer Umgebungstemperatur üblicherweise erstarrende Extrudat E wird in geeigneter Weise aufgefangen und dann der Analyse oder sonstigen Verwendung zugeführt. Es versteht sich, dass die Extrudieröffnung 12 des Extrudierbehälters 1 geeignet geformt sein kann, um dem Extrudat eine gewünschte Querschnittsform zu verleihen.

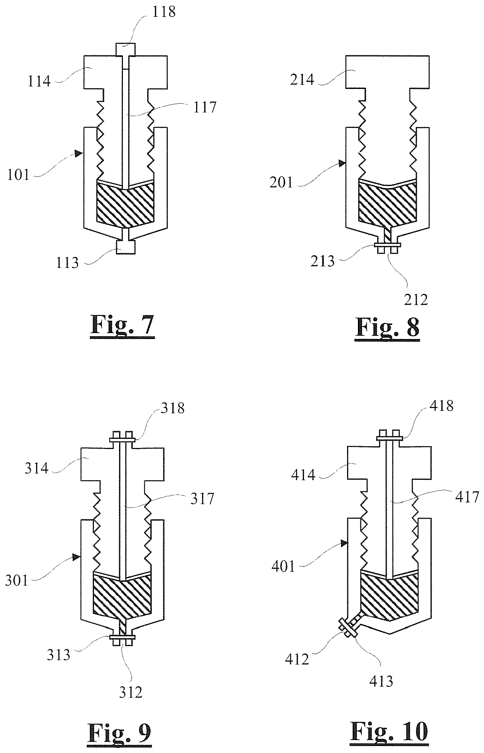

In den Figuren 7-10 sind verschiedene Varianten von Extrudierbehältern jeweils mit darin enthaltenenen, nicht mit Bezugszeichen versehenen Ausgangsprodukten dargestellt.

Beim Extrudierbehälter 101 der Fig. 7 ist der Schraubkolben 114 mit einem axialen Entlüftungskanal 117 versehen, der mit einem abnehmbaren Schraubzapfen 118 verschlossen ist. Die Extrudieröffnung ist mittels eines Absperrmittels in Form eines ein- und ausschraubbaren Schraubzapfens 113 verschlossen.

Beim Extrudierbehälter 201 der Fig. 8 ist das Absperrmittel für die Extrudieröffnung 212 als öffen- und schliessbares Ventil 213 ausgebildet. Der Schraubkolben ist mit 214 bezeichnet.

Beim Extrudierbehälter 301 der Fig. 9 sind sowohl das Absperrmittel für die Extrudieröffnung 312 als auch das Absperrmittel für den Entlüftungskanal 317 im Schraubkolben 314 als Ventil 313 bzw. 318 ausgebildet.

Der Extrudierbehälter 401 der Fig. 10 ist speziell zum Einsatz in den nachstehend erläuterten weiteren Ausführungsbeispielen des erfindungsgemässen Verfahrens ausgebildet. Er weist eine Extrudieröffnung 412 auf, die seitlich schräg nach unten ausmündet und mit einem öffen- und schliessbaren Ventil 413 versehen ist. Ferner weist der Schraubkolben 414 einen Entlüftungskanal 417 mit einem Ventil 418 auf.

Die in den Figuren 1 und 7-10 dargestellten Extrudierbehälter 1, 101, 201, 301 und 401 können auch mit einem Druckablassmittel, z.B. einem Druckablassventil, ausgestattet sein.

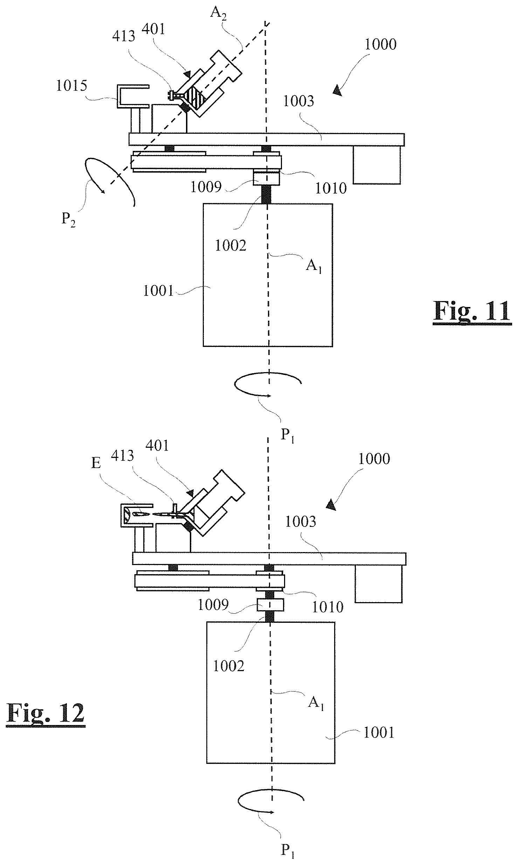

Gemäss einer besonders vorteilhaften Ausführungsvariante des erfindungsgemässen Verfahrens erfolgt der eigentliche Extrudiervorgang bei offener Extrudieröffnung durch einachsige Zentrifugierung des Extrudierbehälters, wie dies im Folgenden im Zusammenhang mit den Figuren 11 und 12 bzw. 13 und 14 erläutert ist.

Die Zentrifugiervorrichtung 1000 ist, wie schon erwähnt, zur Umstellung zwischen einer ersten und einer zweiten Betriebsweise ausgebildet.

In Fig. 11 ist die Zentrifugiervorrichtung 1000 nochmals mit eingestellter erster Betriebsweise dargestellt, in der sie als dual asymmetrische Zentrifuge arbeitet. In der hier nicht dargestellten Fassung 1007 ist der Extrudierbehälter 401 von Fig. 10 mit bezogen auf die primäre Rotationsachse A₁ radial ausmündender Extrudieröffnung gehaltert, wobei der Extrudierbehälter 401 nicht mit allen Details dargestellt ist. Das Ventil 413 ist geschlossen. In dieser Betriebsweise der Zentrifugiervorrichtung erfolgt die Vermischung der Ausgangsprodukte wie im Zusammenhang mit Fig. 4 beschrieben.

In der in Fig. 12 dargestellten Betriebsweise der Zentrifugiervorrichtung 1000 ist das feststehende Kupplungsteil 1009 von der Riemenscheibe 1010 entkoppelt, was in der Zeichnung durch eine axial etwas verschobene Position des Kupplungsteils 1009 angedeutet ist. Die Riemenscheibe 1010 kann sich jetzt frei auf der Welle 1002 drehen. Die Riemenscheibe 1010 dreht sich jetzt mit der Umlaufbewegung der Riemenscheibe 1011 mit und kann somit die letztere nicht mehr drehend antreiben. In dieser Betriebsweise der Zentrifugiervorrichtung dreht sich somit der Extrudierbehälter 401 nicht mehr um die sekundäre Rotationsachse A₂ bzw. um sich selbst, sondern nur noch um die primäre Rotationsachse A₁, wobei die Rotationsbewegung um diese Achse durch den Pfeil P₁ symbolisiert ist. In dieser Betriebsweise arbeitet die Zentrifugiervorrichtung als klassische einachsige Zentrifuge.

Die Umstellung zwischen den beiden Betriebsweisen der Zentrifugiervorrichtung erfolgt konstruktiv sehr einfach durch Kopplung bzw. Entkopplung von Riemenscheibe 1010 und Kupplungsteil 1009. Die Kopplung kann z.B. auf elektromagnetischer Basis realisiert sein.

Für die eigentliche Extrudierung werden nun das Ventil 413 an der Extrudieröffnung 412 sowie auch das Ventil 418 am Entlüftungskanal 417 (Fig. 10) geöffnet. Durch die auftretenden Zentrifugalkräfte werden die im Extrudierbehälter 401 befindlichen, homogen miteinander vermischten Ausgangsprodukte durch die Extrudieröffnung 412 aus dem Extrudierbehälter 401 ausgetrieben und dadurch extrudiert. Die Extrudieröffnung 412 mündet, wie die Figur 12 zeigt, bezogen auf die primäre Rotationsachse A₁ radial aus. Das Extrudat E wird in einem auf dem Drehteller 1003 angeordneten und deshalb bezüglich des Extrudierbehälters 401 ortsfesten Auffangbecher 1015 aufgefangen (Fig. 12).

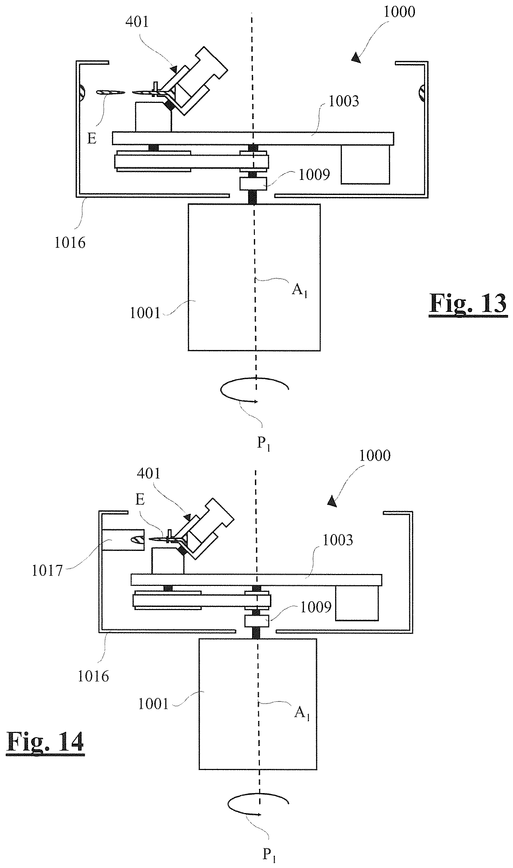

Die in den Figuren 13 und 14 dargestellten weiteren zwei Ausführungsbeispiele der erfindungsgemässen Vorrichtung unterscheiden sich vom Ausführungsbeispiel gemäss Figuren 11 und 12 nur durch die Art und Weise, wie das Extrudat E aufgefangen wird. Anstelle eines auf der Drehscheibe 1003 angeordneten Auffangbehälters ist bei diesen Ausführungsbeispielen eine den Drehteller 1003 und die auf bzw. an ihm montierten Komponenten umschliessende, ortsfeste Wanne 1016 vorgesehen. Beim Ausführungsbeispiel der Fig. 14 ist ferner an der Innenwand der Wanne 1016 noch ein Abschneidblock 1017 angeordnet, welcher den Extrudat-Strang E in kleine Stücke teilt.

Ein grosser Vorteil der erfindungsgemässen Vorrichtung besteht darin, dass sowohl der unter dualer asymmetrischer Zentrifugierung erfolgende Vermischungsschritt als auch die eigentliche Extrudierung durch klassische Zentrifugierung in ein und derselben Zentrifugiervorrichtung durchgeführt werden kann, so dass einerseits für diese beiden Verfahrensschritte keine separaten Vorrichtungen erforderlich sind und anderseits das Handling wesentlich vereinfacht wird.

Das erfindungsgemässe Verfahren und die erfindungsgemässe Vorrichtung sind speziell für die Herstellung von Extrudaten geeignet, bei denen ein pharmazeutischer Wirkstoff in ein Polymer eingeschmolzen ist. Sie sind aber auch für die Herstellung von Extrudaten einsetzbar, bei denen z.B. Aromastoffe in Polymeren fixiert sind. Darüber hinaus sind das Verfahren und die Vorrichtung generell auch für die Herstellung von Extrudaten aus Polymermischungen geeignet. Das Verfahren und die Vorrichtung sind speziell für vor allem in Forschung und Entwicklung benötigte kleine und kleinste Substanzmengen geeignet, lassen sich aber ohne weiteres auch auf Produktionsverhältnisse mit grösseren Substanzmengen skalieren.

In einer weiteren Variante können mehrere Extrudierbehälter zu einem Extruderbehälterblock zusammengefasst werden und gemeinsam dual asymmetrisch zentrifugiert werden. Der eigentliche Extrudiervorgang kann dabei ebenfalls für alle Extrudierbehälter gleichzeitig erfolgen. Dadurch lassen sich in einem Durchgang mehrere Extrudate z.B. mit unterschiedlichen Ausgangsprodukten oder unterschiedlichen Mengenverhältnissen derselben herstellen.

Die Erfindung wurde anhand von Ausführungsbeispielen erläutert, soll jedoch nicht auf diese Ausführungsbeispiele beschränkt sein. Vielmehr sind für den Fachmann zahlreiche Modifikationen denkbar, ohne dabei von der Lehre der Erfindung abzuweichen. Der Schutzbereich wird daher durch die nachstehenden Patentansprüche definiert.

## Patentansprüche

1. Verfahren zur Herstellung eines Extrudats (E), bei dem mindestens zwei Ausgangsprodukte (AP₁, AP₂), von denen mindestens eines ein heissschmelzendes Ausgangsprodukt ist, in einen Extrudierbehälter (1; 101; 201; 301; 401) eingebracht werden, die Ausgangsprodukte (AP₁, AP₂) erwärmt und homogen miteinander vermischt werden und die miteinander vermischten Ausgangsprodukte (AP₁, AP₂) schliesslich gemeinsam aus dem Extrudierbehälter (1; 101; 201; 301; 401) extrudiert werden, **dadurch gekennzeichnet, dass** zur Vermischung der Ausgangsprodukte (AP₁, AP₂) der die Ausgangsprodukte (AP₁, AP₂) enthaltende Extrudierbehälter (1; 101; 201; 301; 401) dual asymmetrisch zentrifugiert wird, wobei der Extrudierbehälter (1; 101; 201; 301; 401) um eine ausserhalb des Extrudierbehälters verlaufende primäre Rotationsachse (A₁) und gleichzeitig um eine durch den Extrudierbehälter verlaufende und zur primären Rotationsachse (A₁) in einem spitzen Winkel (a) stehende sekundäre Rotationsachse (A₂) rotiert wird.

2. Verfahren nach Anspruch 1, **dadurch gekennzeichnet, dass** als Extrudierbehälter ein mit einer versperrbaren Extrudieröffnung (12; 112; 212; 312; 412) ausgestatteter Behälter (1; 101; 201; 301; 401) eingesetzt wird, wobei die Extrudieröffnung (12; 112; 212; 312; 412) während der dualen asymmetrischen Zentrifugierung geschlossen gehalten und vor der Extrudierung geöffnet wird.

3. Verfahren nach Anspruch 1 oder 2, **dadurch gekennzeichnet, dass** die Extrudierung der im Extrudierbehälter (1; 101; 201; 301; 401) befindlichen, miteinander vermischten Ausgangsprodukte (AP₁, AP₂) mittels eines im Extrudierbehälter (1; 101; 201; 301; 401) beweglich angeordneten Kolbens, insbesondere eines Schraubkolbens (14; 114; 214; 314; 414), erfolgt.

4. Verfahren nach Anspruch 1 oder 2, **dadurch gekennzeichnet, dass** die Extrudierung der im Extrudierbehälter (401) befindlichen, miteinander vermischten Ausgangsprodukte (AP₁, AP₂) durch einachsige Zentrifugierung des Extrudierbehälters (401) erfolgt.

5. Verfahren nach 4, **dadurch gekennzeichnet, dass** die Vermischung der im Extrudierbehälter (401) befindlichen Ausgangsprodukte (AP₁, AP₂) in einer um zwei Rotationsachsen (A₁, A₂) dual asymmetrisch zentrifugierenden Vorrichtung (1000) durchgeführt wird und dass die Extrudierung der im Extrudierbehälter (401) befindlichen Ausgangsprodukte (AP₁, AP₂) nach der Vermischung in derselben Vorrichtung (1000) durchgeführt wird, wobei die Vorrichtung (1000) während der Extrudierung nur um eine (A₁) der beiden Rotationsachsen zentrifugiert.

6. Vorrichtung zur Herstellung eines Extrudats (E) aus mindestens zwei Ausgangsprodukten (AP₁, AP₂), von denen mindestens eines ein heissschmelzendes Ausgangsprodukt ist, mit
- einem eine Extrudieröffnung (12; 112; 212; 312; 412) aufweisenden Extrudierbehälter (1; 101; 201; 301; 401) zur Aufnahme der Ausgangsprodukte (AP₁, AP₂),
- Heizmitteln (2020) zur Erwärmung der im Extrudierbehälter (1; 101; 201; 301; 401) befindlichen Ausgangsprodukte (AP₁, AP₂) und
- Extrudiermitteln (14; 114; 214; 314; 414) zur Extrudierung der im Extrudierbehälter (1; 101; 201; 301; 401) befindlichen Ausgangsprodukte (AP₁, AP₂) aus dem Extrudierbehälter (1; 101; 201; 301; 401),
**gekennzeichnet durch**
Zentrifugiermittel (1000) zur dual asymmetrischen Zentrifugierung des Extrudierbehälters (1; 101; 201; 301; 401) um eine primäre Rotationsachse (A₁) und eine sekundäre Rotationsachse (A₂), wobei die primäre Rotationsachse (A₁) ausserhalb des Extrudierbehälters (1; 101; 201; 301; 401) verläuft und die sekundäre Rotationsachse (A₂) durch den Extrudierbehälter (1; 101; 201; 301; 401) verläuft und zur primären Rotationsachse (A₁) in einem spitzen Winkel (a) steht.

7. Vorrichtung nach Anspruch 6, **dadurch gekennzeichnet, dass** sie Absperrmittel (13; 113; 213; 313; 413) zum Öffnen und Schliessen der Extrudieröffnung (12; 112; 212; 312; 412) des Extrudierbehälters (1; 101; 201; 301; 401) umfasst.

8. Vorrichtung nach Anspruch 6 oder 7, **dadurch gekennzeichnet, dass** die Extrudiermittel einen im Extrudierbehälter (1; 101; 201; 301; 401) beweglich angeordneten Kolben zum Ausstossen der im Extrudierbehälter (1; 101; 201; 301; 401) befindlichen, miteinander vermischten Ausgangsprodukte (AP₁, AP₂) durch die Extrudieröffnung (12; 112; 212; 312; 412) umfassen, wobei der Kolben vorzugsweise als durch Drehung im Extrudierbehälter (1; 101; 201; 301; 401) vorschiebbarer Schraubkolben (14; 114; 214; 314; 414) ausgebildet ist.

9. Vorrichtung nach Anspruch 8, **dadurch gekennzeichnet, dass** der Kolben (114; 314; 414) mit einer Entlüftungsöffnung (117; 317; 417) versehen ist, die vorzugsweise öffen- und schliessbar ist.

10. Vorrichtung nach Anspruch 8 oder 9, **dadurch gekennzeichnet, dass** sie Antriebsmittel (2000, 2001, 2003) für die Bewegung des Kolbens (14; 114; 214; 314; 414) relativ zum Extrudierbehälter (1; 101; 201; 301; 401) umfasst.

11. Vorrichtung nach einem der Ansprüche 6-10, **dadurch gekennzeichnet, dass** sie zwischen einer ersten und einer zweiten Betriebsweise umstellbar ausgebildet ist, wobei in der ersten Betriebsweise der Extrudierbehälter (1; 101; 201; 301; 401) um beide Rotationsachsen (A₁, A₂) rotiert und in der zweiten Betriebsweise der Extrudierbehälter (1; 101; 201; 301; 401) nur um eine der beiden Rotationsachsen (A₁, A₂) rotiert.

12. Vorrichtung nach einem der Ansprüche 6-11, **dadurch gekennzeichnet, dass** sie erste Antriebsmittel (1001, 1002, 1003) zum rotativen Antrieb des Extrudierbehälters (1; 101; 201; 301; 401) um die primäre Rotationsachse (A₁) und mit den ersten Antriebsmitteln kuppel- und entkuppelbare zweite Antriebsmittel (1004, 1005, 1006, 1010, 1011, 1012) zum rotativen Antrieb des Extrudierbehälters (1; 101; 201; 301; 401) um die sekundäre Rotationsachse (A₂) aufweist.

13. Vorrichtung nach einem der Ansprüche 6-12, **dadurch gekennzeichnet, dass** sie dazu ausgebildet ist, die im Extrudierbehälter (401) befindlichen, miteinander vermischten Ausgangsprodukte (AP₁, AP₂) bei geöffneter Extrudieröffnung (412) durch einachsige Zentrifugierung um die primäre Rotationsachse (A₁) aus dem Extrudierbehälter (401) zu extrudieren.

14. Vorrichtung nach einem der Ansprüche 6-13, **dadurch gekennzeichnet, dass** die Extrudieröffnung (412) bezogen auf die primäre Rotationsachse (A₁) im Wesentlichen radial aus dem Extrudierbehälter (401) ausmündet.

15. Vorrichtung nach einem der Ansprüche 6-14, **dadurch gekennzeichnet, dass** sie Auffangmittel (1015; 1016) für aus dem Extrudierbehälter (401) austretendes Extrudat (E) aufweist.

## Claims

1. Method for producing an extrudate (E), in which at least two starting products (AP₁, AP₂), at least one of which is a hot melting starting product, are introduced into an extrusion container (1; 101; 201; 301; 401), the starting products (AP₁, AP₂) are heated and homogeneously intermixed, and lastly, the intermixed starting products (AP₁, AP₂) are jointly extruded from the extrusion container (1; 101; 201; 301; 401), **characterized in that** for mixing the starting products (AP₁, AP₂), the extrusion container (1; 101; 201; 301; 401) containing the starting products (AP₁, AP₂) is dual asymmetrically centrifuged, the extrusion container (1; 101; 201; 301; 401) being rotated about a primary rotation axis (A₁) that extends outside the extrusion container, and being simultaneously rotated about a secondary rotation axis (A₂) that extends through the extrusion container and is situated at an acute angle (α) with respect to the primary rotation axis (A₁).

2. Method according to Claim 1, **characterized in that** a container (1; 101; 201; 301; 401) equipped with a lockable extrusion opening (12; 112; 212; 312; 412) is used as the extrusion container, the extrusion opening (12; 112; 212; 312; 412) being kept closed during the dual asymmetric centrifugation, and being opened prior to the extrusion.

3. Method according to Claim 1 or 2, **characterized in that** the extrusion of the intermixed starting products (AP₁, AP₂) present in the extrusion container (1; 101; 201; 301; 401) takes place by means of a piston, in particular a screw piston (14; 114; 214; 314; 414), that is movably situated in the extrusion container (1; 101; 201; 301; 401).

4. Method according to Claim 1 or 2, **characterized in that** the extrusion of the intermixed starting products (AP₁, AP₂) present in the extrusion container (401) takes place by single-axis centrifugation of the extrusion container (401).

5. Method according to Claim 4, **characterized in that** the mixing of the starting products (AP₁, AP₂) present in the extrusion container (401) is carried out in a device (1000) which is dual asymmetrically centrifuged about two rotation axes (A₁, A₂), and the extrusion of the starting products (AP₁, AP₂) present in the extrusion container (401) is carried out after the mixing, in the same device (1000), the device (1000) being centrifuged about only one (A₁) of the two rotation axes during the extrusion.

6. Device for producing an extrudate (E) from at least two starting products (AP₁, AP₂), at least one of which is a hot-melting starting product, comprising
- an extrusion container (1; 101; 201; 301; 401) for receiving the starting products (AP₁, AP₂), having an extrusion opening (12; 112; 212; 312; 412),
- heating means (2020) for heating the starting products (AP₁, AP₂) present in the extrusion container (1; 101; 201; 301; 401),
- extrusion means (14; 114; 214; 314; 414) for extruding the starting products (AP₁, AP₂), present in the extrusion container (1; 101; 201; 301; 401), from the extrusion container (1; 101; 201; 301; 401),
**characterized by**
- centrifugation means (1000) for dual asymmetric centrifugation of the extrusion container (1; 101; 201; 301; 401) about a primary rotation axis (A₁) and a secondary rotation axis (A₂), the primary rotation axis (A₁) extending outside the extrusion container (1; 101; 201; 301; 401), and the secondary rotation axis (A₂) extending through the extrusion container (1; 101; 201; 301; 401) and being situated at an acute angle (α) with respect to the primary rotation axis (A₁).

7. Device according to Claim 6, **characterized in that** it includes locking means (13; 113; 213; 313; 413) for opening and closing the extrusion opening (12; 112; 212; 312; 412) of the extrusion container (1; 101; 201; 301; 401).

8. Device according to Claim 6 or 7, **characterized in that** the extrusion means include a piston, movably situated in the extrusion container (1; 101; 201; 301; 401), for ejecting the intermixed starting products (AP₁, AP₂), present in the extrusion container (1; 101; 201; 301; 401), through the extrusion opening (12; 112; 212; 312; 412), the piston preferably being designed as a screw piston (14; 114; 214; 314; 414) that is advanceable by rotation in the extrusion container (1; 101; 201; 301; 401).

9. Device according to Claim 8, **characterized in that** the piston (114; 314; 414) is provided with a vent opening (117; 317; 417) that is preferably openable and closable.

10. Device according to Claim 8 or 9, **characterized in that** it includes drive means (2000, 2001, 2003) for moving the piston (14; 114; 214; 314; 414) relative to the extrusion container (1; 101; 201; 301; 401).

11. Device according to any one of Claims 6 to 10, **characterized in that** it is designed to be changeable between a first and a second operating mode, in the first operating mode the extrusion container (1; 101; 201; 301; 401) rotating about both rotation axes (A₁, A₂), and in the second operating mode the extrusion container (1; 101; 201; 301; 401) rotating about only one of the two rotation axes (A₁, A₂).

12. Device according to any one of Claims 6 to 11, **characterized in that** it includes first drive means (1001, 1002, 1003) for rotatably driving the extrusion container (1; 101; 201; 301; 401) about the primary rotation axis (A₁), and second drive means (1004, 1005, 1006, 1010, 1011, 1012), which may be coupled to and decoupled from the first drive means, for rotatably driving the extrusion container (1; 101; 201; 301; 401) about the secondary rotation axis (A₂).

13. Device according to any one of Claims 6 to 12, **characterized in that** it is designed for extruding the intermixed starting products (AP₁, AP₂), present in the extrusion container (401), from the extrusion container (401) by single-axis centrifugation about the primary rotation axis (A₁), with the extrusion opening (412) open.

14. Device according to any one of Claims 6 to 13, **characterized in that** the extrusion opening (412) opens out from the extrusion container (401) essentially radially relative to the primary rotation axis (A₁).

15. Device according to any one of Claims 6 to 14, **characterized in that** it has collection means (1015; 1016) for extrudate (E) exiting from the extrusion container (401).

## Revendications

1. Procédé pour la production d'un produit extrudé (E), dans lequel au moins deux produits de départ (AP₁, AP₂), dont l'un au moins est un produit de départ en fusion à chaud, sont introduits dans un réservoir d'extrusion (1; 101; 201; 301; 401), les produits de départ (AP₁, AP₂) sont chauffés et sont mélangés l'un à l'autre de façon homogène, et les produits de départ (AP₁, AP₂) mélangés l'un à l'autre sont finalement extrudés conjointement hors du réservoir d'extrusion (1; 101; 201; 301; 401), **caractérisé en ce que** pour mélanger les produits de départ (AP₁, AP₂), le réservoir d'extrusion (1; 101; 201; 301; 401) qui contient les produits de départ (AP₁, AP₂) est centrifugé de manière doublement asymétrique, de sorte que le réservoir d'extrusion (1; 101; 201; 301; 401) est mis en rotation autour d'un axe de rotation primaire (A₁) s'étendant à l'extérieur du réservoir d'extrusion, et simultanément autour d'un axe de rotation secondaire (A₂) passant à travers le réservoir d'extrusion et disposé sous un angle aigu (α) par rapport à l'axe de rotation primaire (A₁).

2. Procédé selon la revendication 1, **caractérisé en ce que** l'on emploie à titre de réservoir d'extrusion un réservoir (1; 101; 201; 301; 401) doté d'une ouverture d' extrusion (12; 112; 212; 312; 412) susceptible d'être obturée, dans lequel l'ouverture d'extrusion (12; 112; 212; 312; 412) est maintenue fermée pendant la centrifugation doublement asymétrique, et est ouverte avant l'extrusion.

3. Procédé selon la revendication 1 ou 2, **caractérisé en ce que** l'extrusion des produits de départ (AP₁, AP₂) mélangés l'un à l'autre qui se trouvent dans le réservoir d'extrusion (1; 101; 201; 301; 401) a lieu au moyen d'un piston, en particulier d'un piston à vis (14; 114; 214; 314; 414), agencé déplaçable dans le réservoir d'extrusion (1; 101; 201; 301; 401).

4. Procédé selon la revendication 1 ou 2, **caractérisé en ce que** l'extrusion des produits de départ (AP₁, AP₂) mélangés l'un à l'autre qui se trouvent dans le réservoir d'extrusion (401) a lieu au moyen d'une centrifugation monoaxiale du réservoir d'extrusion (401).

5. Procédé selon la revendication 4, **caractérisé en ce que** le mélange des produits de départ (AP₁, AP₂) qui se trouvent dans le réservoir d'extrusion (401) est exécuté dans un appareil de centrifugation doublement asymétrique (1000) autour de deux axes de rotation (A₁, A₂), et **en ce que** l'extrusion des produits de départ (AP₁, AP₂) qui se trouvent dans le réservoir d'extrusion (401) est exécutée après les avoir mélangés dans le même appareil (1000), et l'appareil (1000) effectue pendant l'extrusion une centrifugation uniquement autour de l'un des deux axes de rotation (A₁).

6. Appareil pour la production d'un produit extrudé (E) à partir d'au moins deux produits de départ (AP₁, AP₂), dont l'un au moins est un produit de départ en fusion à chaud, comprenant
- un réservoir d'extrusion (1; 101; 201; 301; 401) comportant une ouverture d'extrusion (12; 112; 212; 312; 412) pour la réception des produits de départ (AP₁, AP₂),
- un moyen de chauffage (2020) pour échauffer les produits de départ (AP₁, AP₂) qui se trouvent dans le réservoir d'extrusion (1; 101; 201; 301; 401), et
- un moyen d'extrusion (14; 114; 214; 314; 414) pour extruder hors du réservoir d'extrusion (1; 101; 201; 301; 401) les produits de départ (AP₁, AP₂) qui se trouvent dans le réservoir d'extrusion (1; 101; 201; 301; 401),
**caractérisé par**
un moyen de centrifugation (1000) pour la centrifugation doublement asymétrique du réservoir d'extrusion (1; 101; 201; 301; 401) autour d'un axe de rotation primaire (A₁) et d'un axe de rotation secondaire (A₂), dans lequel l'axe de rotation primaire (A₁) s'étend à l'extérieur du réservoir d'extrusion (1; 101; 201; 301; 401) et l'axe de rotation secondaire (A₂) s'étend à travers le réservoir d'extrusion (1; 101; 201; 301; 401) et est disposé sous un angle aigu (α) par rapport à l'axe de rotation primaire (A₁).

7. Appareil selon la revendication 6, **caractérisé en ce qu'**il inclut un moyen d'obturation (13; 113; 213; 313; 413) pour ouvrir et pour fermer l'ouverture d'extrusion (12; 112; 212; 312; 412) du réservoir d'extrusion (1; 101; 201; 301; 401).

8. Appareil selon la revendication 6 ou 7, **caractérisé en ce que** le moyen d'extrusion inclut un piston, agencé déplaçable dans le réservoir d'extrusion (1; 101; 201; 301; 401) pour éjecter les produits de départ (AP₁, AP₂), mélangés l'un à l'autre qui se trouvent dans le réservoir d'extrusion (1; 101; 201; 301; 401), à travers l'ouverture d'extrusion (12; 112; 212; 312; 412), dans lequel le piston est de préférence réalisé sous la forme d'un piston à vis (14; 114; 214; 314; 414) avancé par rotation dans le réservoir d'extrusion (1; 101; 201; 301; 401).

9. Appareil selon la revendication 8, **caractérisé en ce que** le piston (114; 314; 414) est doté d'une ouverture de purge d'air (117; 317; 417), qui est de préférence susceptible d'être ouverte et fermée.

10. Appareil selon la revendication 8 ou 9, **caractérisé en ce qu'**il inclut un moyen d'entraînement (2000, 2001, 2003) pour le déplacement du piston (14; 114; 214; 314; 414) par rapport au réservoir d'extrusion (1; 101; 201; 301; 401).

11. Appareil selon l'une des revendications 6 à 10, **caractérisé en ce qu'**il est réalisé de manière à être inversé entre un premier et un second mode de fonctionnement, tel que, dans le premier mode de fonctionnement, le réservoir d'extrusion (1; 101; 201; 301; 401) est mis en rotation autour des deux axes de rotation (A₁, A₂) et, dans le second mode de fonctionnement, le réservoir d'extrusion (1; 101; 201; 301; 401) est mis en rotation uniquement autour de l'un des deux axes de rotation (A₁, A₂).

12. Appareil selon l'une des revendications 6 à 11, **caractérisé en ce qu'**il comprend un premier moyen d'entraînement (1001, 1002, 1003) pour l'entraînement en rotation du réservoir d'extrusion (1; 101; 201; 301; 401) autour de l'axe de rotation primaire (A₁), et un second moyen d'entraînement (1004, 1005, 1006, 1010, 1011, 1012) susceptible d'être couplé et découplé du premier moyen d'entraînement pour l'entraînement en rotation du réservoir d'extrusion (1; 101; 201; 301; 401) autour de l'axe de rotation secondaire (A₂).

13. Appareil selon l'une des revendications 6 à 12, **caractérisé en ce qu'**il est réalisé afin d'extruder hors du réservoir d'extrusion (401) les produits de départ (AP₁, AP₂) mélangés l'un à l'autre qui se trouvent dans le réservoir extrusion (401) alors que l'ouverture d'extrusion (412) est ouverte, par centrifugation monoaxiale autour de l'axe de rotation primaire (A1).

14. Appareil selon l'une des revendications 6 à 13, **caractérisé en ce que**, par référence à l'axe de rotation primaire (A1), l'ouverture d'extrusion (412) débouche essentiellement radialement hors du réservoir d'extrusion (401) .

15. Appareil selon l'une des revendications 6 à 14, **caractérisé en ce qu'**il comprend un moyen de collecte (1015; 1016) pour du produit extrudé (E) sortant du réservoir d'extrusion (401).
